# EUROPÄISCHE PATENTANMELDUNG

(11) **EP 1 654 924 A2**
(43) Veröffentlichungstag der Anmeldung: **10.05.2006**
(21) Anmeldenummer: 05022190.2
(22) Anmeldetag: 12.10.2005
(51) Int. Cl.: A01G 9/10

(54) **Pflanzensubstrat, Verfahren zu seiner Herstellung und dessen Verwendung**

(30) Priorität: 20.10.2004 DE 102004051233
(71) Anmelder: Intertoresa AG, 4665 Oftringen (CH)
(72) Erfinder: Kharazipour, Alireza, 37079 Göttingen (DE)
(74) Vertreter: Harders, Gerhard

(57) **Zusammenfassung**

Ein Pflanzensubstrat, z. B. zur Anzucht von Zierpflanzen, Gemüse oder Bäumen enthält rotfaules Holz, dass mechanisch oder thermo-mechanisch zerfasert worden ist. Dem zerfaserten Holz können Hilfsstoffe aus folgenden Gruppen zugemischt werden: Schädlingsbekämpfungsmittel, wie z. B. Fungizide und Bakterizide, Netzmittel, Farbstoffe, Stabilisatoren, Geruchshemmer, Duftstoffe, Torf, Kohle, Holzkohle, Braunkohle, Aktivkohle, organische Mehle, pH-regulierende Stoffe.

## Beschreibung

Angesichts der immer knapper werdenden Torfvorkommen wird insbesondere in Europa sehr intensiv nach Substitutionsmöglichkeiten dafür gesucht. Allein die Erwerbsgärtnerei benötigt für ihre Kultursubstrate jährlich 10 Millionen Kubikmeter Torf.

Rotfaules Holz kann - wenn überhaupt - derzeit nur mit erheblichen Preisabschlägen vermarktet werden. Insbesondere die Fichte, die die wichtigste Baumart in Deutschland ist, ist zu etwa 20 % der Fichtenstammholzernte durch den Rotfäulepilz (*Heterobasidion annosum*) befallen. Der Holzabbau beginnt vom Inneren der Stämme her und ist an der schmutzigbraunen Farbe erkennbar. Die äußeren Zonen des Stammes sind häufig weniger oder gar nicht befallen.

Es wurde überraschenderweise gefunden, dass rotfaules Holz sich zu einem guten Pflanzensubstrat verarbeiten lässt. Der Befall hat auf die Eigenschaften als Pflanzensubstrat keine negativen Eigenschaften.

Es hat sich als zweckmäßig erwiesen, bei der Gewinnung der rotfaulen Hölzer die äußeren noch nicht befallenden Zonen abzutrennen. Die intakten Schwarten können als Industrieholz in die Holzwerkstoffindustrie gehen. Diese tangentiale Schälung der Stämme kann z. B. mit Gattersägen durchgeführt werden. Die inneren befallenen Schichten werden dann zerfasert, was infolge des Befalls mit einem wesentlich geringeren Energieaufwand durchführbar ist als bei gesundem Holz. Die Zerfaserung kann in einem üblichen Gartenschredder durchgeführt werden, es eignen sich aber auch andere Zerfaserungsvorrichtungen, wie beispielweise ein Refiner oder eine Thermo-Schneckenpresse, wie sie in der EP 0 472 684 B1 beschrieben ist.

Nach Bedarf lassen sich aus zerfasertem Material definierte Fraktionen aussieben.

Das erfindungsgemäß hergestellte Pflanzensubstrat weist eine hohe Wasserkapazität und gute Luftdurchlässigkeit auf. Es ist ein guter Ionenaustauscher und kann deshalb als Depot für Makronährstoffe dienen. Die Keimfähigkeit und das Pflanzenwachstum werden begünstigt. Die Bereitstellung der für das Pflanzenwachstum benötigten Nährstoffe, insbesondere von Stickstoff, kann zeitlich eingestellt werden. Staunässe tritt nicht auf, eine Verdichtung findet nicht statt.

Insgesamt ist eine verlangsamte Evaporation zu beobachten. Der pH-Wert des Pflanzensubstrates liegt bei ca. 4,3 - 4,5. Dadurch kann der für die Kulturen benötigte pH-Bereich ähnlich wie beim Torf durch Kalken optimal eingestellt werden. Der Gehalt an Inhaltstoffen, die das Pflanzenwachstum hemmen, liegt sehr niedrig.

Das erfindungsgemäße Pflanzensubstrat hat außerdem den Vorteil, dass es auch nach längeren Lagerzeiten keine Wärmeentwicklung zeigt, die auf mikrobielle Reaktionen zurückführen ist. Voraussetzung hierfür ist allerdings, dass dem Pflanzensubstrat keine weiteren organischen Stoffe zugefügt werden, die solche Reaktionen ermöglichen. Dies ist der Grund dafür, dass bei der Gewinnung der rotfaulen Hölzer, wie oben beschrieben, die nicht befallenen gesunden Holzschwarten möglichst entfernt werden sollen, da sie bei Nichtentfernung als organisches Material eine mikrobielle Erwärmung des Pflanzensubstrats begünstigen. Der Anteil an organischem Material im Pflanzensubstrat sollte möglichst nicht über 20 Vol.-% liegen, da ab dieser Grenze eine spürbare Erwärmung einsetzen kann.

Dadurch, dass eine Erwärmung vermieden werden kann, ist ein Transport des Pflanzensubstrats in größeren Gebinden oder eine Lagerung in größeren Mengen möglich, ohne dass es zu einer unerwünschten Erwärmung oder gar zu einer Selbstentzündung kommt. Die bisher bekannten Pflanzensubstrate zeigen häufig eine solche unerwünschte Wärmeentwicklung.

Dem Pflanzensubstrat können übliche Mineraldünger zugesetzt werden, beispielweise Stickstoffdünger, Phosphatdünger oder Kalidünger. Die Mineraldünger sollten nach Möglichkeit keine organischen Zusätze enthalten.

Das vorliegende Verfahren bietet die Möglichkeit, den bisher nicht sinnvoll nutzbaren Rohstoff rotfaules Holz in ein marktgängiges Produkt umzuwandeln, das die Eigenschaften des bisher eingesetzten Torfs übertrifft.
Die Struktur der Holzfasern kann durch die verwendete Zerfaserungsmethode beeinflusst werden. Z. B. kann durch Verstellung des Mahlscheibenabstandes des Refiners der Faserdurchmesser und die Faserlänge beeinflusst werden.
Die Erfindung wird nachfolgend anhand der Beispiele näher erläutert.

### Beispiel 1

Rotfaule Fichtenholzstämme wurden auf eine Länge von 2,5 m geschnitten und mit einer Gattersäge tangential von außen nach innen geschält. Die noch intakten äußeren Schwarten wurden für Holzwerkstoffe verwendet. Die inneren befallenen Bereiche wurden in einem Schredder zerfasert. Bei dem zur Zerfaserung eingesetzten Schredder handelte es sich um eine Doppelschnecken-Retruder der Firma INTERTORESA AG. Die Zerfaserung erfolgte thermo-mechanisch unter hohem Druck bei 80°C. Die erhaltenen Fasern hatten folgende Eigenschaften:

| | | |
|---|---|---|
| **Feuchtigkeitsgehalt** | **26,5 % mm** | |
| **Trockenrückstand** | **73,5 % mm** | |
| **Rohdichte (Trocken)** | **96 kg/m**^{**3**} | |
| **Wasserkapazität** | **377 g/100 g TM** | |
| **Gesamtporenvolumen** | **93 % V/V** | |
| **Wasserkapazität** | **36 % V/V** | |
| **Luftkapazität** | **57 % V/V** | |
| **Asche** | **0,2 % m/m** | |
| **Organ. Substanz** | **99,8 % V/V** | |
| **Schrumpfungswert** | **2 %** | |
| **Kationenaustauschkapazität (nach Mehlich, Austausch bei pH 8,2)** | **16,7 mmol/1Ä/100 g = cmol**_{**c**} **x kg** | |
| **Körnungsverteilung** | **> 8 mm** | **ca. 1 Gew.-%** |
| | **5 - 8 mm** | **ca. 5 Gew.-%** |
| | **2 - 5 mm** | **ca. 20 Gew.-%** |
| | **< 2 mm** | **ca. 74 Gew.-%** |
| **Temperatur Endprodukt** | **Ca. 30°C (Nach 7 Tagen)** | |
| **Verpilzung** | **Keine erkennbare Verpilzung** | |

### Beispiel 2

Die nach Beispiel 1 erhaltenen Fasern wurden durch Zusatz von 2 Vol.-% eines Stickstoff-Phosphat-Kali-Düngers zu einem Keimsubstrat verarbeitet, das in einem nachfolgenden Keimpflanzentest eingesetzt wurde. Der pH-Wert wurde durch Zusatz von 1g/l CaCo₃ eingestellt.

| | | |
|---|---|---|
| **Körnungsverteilung** | **> 8 mm** | **ca. 1 Gew.-%** |
| | **5 - 8 mm** | **ca. 5 Gew.-%** |
| | **2 - 5 mm** | **ca. 20 Gew.-%** |
| | **< 2 mm** | **ca. 74 Gew.-%** |
| **Temperatur Endprodukt** | **Ca. 35°C (Nach 7 Tagen)** | |
| **Verpilzung** | **Keine erkennbare Verpilzung** | |

### Beispiel 3

Analog Beispiel 2 wurde ein Keimsubstrat hergestellt aus 33 Vol.-% des Produktes nach Beispiel 1, das mit 33 Vol.-% Frischholz-Hackschnitzel mit Rindenanteil Fichte und mit 33 Vol.-% Siebgut "Sticks" Fichte ohne Rinde vermischt wurde. Es wurde 2 Vol.-% Dünger wie in Beispiel 2 zugesetzt. Das Endprodukt wurde mit 0,5 Vol.-% Braunkohle pigmentiert.

Zur Herstellung eines Keimsubstrates wurden zugefügt:
33 Vol.-% TMP Hackschnitzel Fichte mit Rindenanteil Fichte
33 Vol.-% Siebgut "Sticks" Fichte ohne Rinde
Körnung des Endprodukts: mittel

| | | |
|---|---|---|
| **Körnungsverteilung** | **> 8 mm** | **ca. 10 Gew.-%** |
| | **5 - 8 mm** | **ca. 15 Gew.-%** |
| | **2 - 5 mm** | **ca. 20 Gew.-%** |
| | **< 2 mm** | **ca. 55 Gew.-%** |

### Beispiel 4

Analog Beispiel 1 wurde ein Keimsubstrat hergestellt aus 50 Vol.-% des Produktes nach Beispiel 1, das mit 50 Vol.-% TMP-Hackschnitzel (Thermo-mechanic-Pulp) Fichte ohne Rindenanteil. Es wurde 2 Vol.-% Dünger wie in Beispiel 2 zugesetzt. Pigmentierung wie in Beispiel 3.

Zur Herstellung eines Keimsubstrates wurden zugefügt:
50 Vol.-% TMP Hackschnitzel Fichte mit Rindenanteil Fichte

Körnung des Endprodukts: grob

| | | |
|---|---|---|
| **Körnungsverteilung** | **> 8 mm** | **ca. 10 Gew.-%** |
| | **5 - 8 mm** | **ca. 20 Gew.-%** |
| | **2 - 5 mm** | **ca. 20 Gew.-%** |
| | **< 2 mm** | **ca. 50 Gew.-%** |

### Beispiel 5

Die Keimsubstrate der Beispiele 1 bis 4 wurden in einem Keimpflanzentest mit Chinakohl eingesetzt. Dafür wurden alle Keimsubstrate mit 30 % Einheitserde (TKS) vermischt.

Dabei wurde die Zunahme der Frischmasse nach einem Zeitraum von 3 Wochen ermittelt.

Alle Keimsubstrate wurden mit 30 Vol.-% Einheitserde vermischt. Die Untersuchungen ergaben folgende Ergebnisse.

| **Keimsubstrat nach Beispiel** | **FM (g/Topf)** | | **FM (x) [g]** | **FM (r) [%]** | **Gasphase** |
|---|---|---|---|---|---|
| | **WH1** | **WH2** | | | |
| **Einheitserde** | **14,3** | **13,8** | **14,1** | **100** | **nein** |
| **1** | **11,4** | **12,3** | **11,9** | **84** | **nein** |
| **2** | **13,1** | **13,1** | **13,1** | **93** | **nein** |
| **4** | **14,1** | **14,2** | **14,2** | **101** | **nein** |
| **3** | **12,7** | **12,8** | **12,8** | **91** | **nein** |

| | | | | | |
|---|---|---|---|---|---|
| FM = Frischmasse WH = Wiederholung (x) = Mittelwert (r) = Standardabweichung | | | | | |

### Beispiel 6

Rotfaule Fichtenholzstämme mit Rinde wurden auf eine Länge von 5 m geschnitten und in einem Brecher zerkleinert. Bei der zur Zerfaserung eingesetzten Maschine handelte es sich um eine Doppelschnecken-Retruder der Firma INTERTORESA AG. Die Zerfaserung erfolgte thermo-mechanisch unter hohem Druck bei 95°C. Die erhaltenen Fasern hatten folgende Eigenschaften:

| | |
|---|---|
| **Feuchtigkeitsgehalt** | **28 % mm** |
| **Trockenrückstand** | **73,5 % mm** |
| **Rohdichte (Trocken)** | **98 kg/m**^{**3**} |
| **Wasserkapazität** | **377 g/100 g TM** |
| **Gesamtporenvolumen** | **94 % V/V** |
| **Wasserkapazität** | **38 % V/V** |
| **Luftkapazität** | **56 % V/V** |
| **Asche** | **0,4 % m/m** |
| **Organ. Substanz** | **99,6 % V/V** |
| **Schrumpfungswert** | **2 %** |
| **Kationenaustauschkapazität (nach Mehlich, Austausch bei pH 8,2)** | **16,7 mmol/1Ä/100 g = cmol**_{**c**} **x kg** |

Die nach Beispiel 6 erhaltenen Fasern wurden durch Zusatz von 3 Vol.-% eines Stickstoff-Phosphat-Kali-Düngers zu einem Keimsubstrat verarbeitet, das in einem nachfolgenden Keimpflanzentest eingesetzt wurde. Der pH-Wert wurde durch Zusatz von 1g/l CaCo₃ eingestellt.

Das Keimsubstrat des Beispiels 6 wurde in einem Keimpflanzentest mit Chinakohl eingesetzt. Dabei wurde die Zunahme der Frisch- und Trockenmasse nach einem Zeitraum von 3 Wochen ermittelt. Dabei entstanden folgende Ergebnisse.

| | **WH 1 (g/Topf)** | | **WH 2 (g/Topf)** | | **WH 2 (g/Topf)** | |
|---|---|---|---|---|---|---|
| | **FM** | **TM** | **FM** | **TM** | **FM** | **TM** |
| **Keimsubstrat nach Beispiel 6** | **27,4** | **1,1** | **29** | **1,1** | **28,9** | **1,2** |
| **TKS 1** | **32,1** | **1,1** | **43,2** | **1,8** | **43,1** | **1,6** |

| | | | | | | |
|---|---|---|---|---|---|---|
| FM = Frischmasse TM = Trockenmasse WH = Wiederholung | | | | | | |

| | | |
|---|---|---|
| **Körnungsverteilung** | **> 8 mm** | **ca. 2 Gew.-%** |
| | **5 - 8 mm** | **ca. 7 Gew.-%** |
| | **2 - 5 mm** | **ca. 22 Gew.-%** |
| | **< 2 mm** | **ca. 69 Gew.-%** |
| **Temperatur Endprodukt** | **ca. 25°C (Nach 7 Tagen)** | |
| **Verpilzung** | **Keine erkennbare Verpilzung** | |

## Patentansprüche

1. Verfahren zur Herstellung eines Pflanzensubstrates,
**dadurch gekennzeichnet, dass**
rotfaules Holz mechanisch oder thermo-mechanisch zerfasert wird.

2. Verfahren nach Anspruch 1 **dadurch gekennzeichnet, dass** die Zerfaserung durch Schreddern erfolgt.

3. Verfahren nach Anspruch 1 **dadurch gekennzeichnet, dass** die Zerfaserung in einer Thermo-Schneckenpresse durchgeführt wird.

4. Verfahren nach Anspruch 1 **dadurch gekennzeichnet, dass** die Zerfaserung in einem Refiner durchgeführt wird.

5. Verfahren nach Anspruch 1 **dadurch gekennzeichnet, dass** dem zerfaserten Holz ein Dünger zugemischt wird.

6. Verfahren nach Anspruch 1 **dadurch gekennzeichnet, dass** dem zerfaserten Holz Hilfsstoffe aus folgender Gruppe zugemischt werden: Schädlingsbekämpfungsmittel, wie z. B. Fungizide und Bakterizide, Netzmittel, Farbstoffe, Stabilisatoren, Geruchshemmer, Duftstoffe, Torf, Kohle, Holzkohle, Braunkohle, Aktivkohle, organische Mehle, pH-regulierende Stoffe.

7. Verfahren nach Anspruch 1 **dadurch gekennzeichnet, dass** der pH-Wert des Pflanzensubstrates durch Kalken eingestellt wird.

8. Pflanzensubstrat erhalten nach den Verfahren der Patenansprüche 1 bis 7.

9. Verwendung des Pflanzensubstrates nach Anspruch 8 für die Anzucht von Zierpflanzen, Gemüse oder Bäumen.
